# EUROPEAN PATENT SPECIFICATION

(11) **EP 1 932 743 B1**
(45) Date of publication and mention of the grant of the patent: **23.04.2014**
(21) Application number: 07079512.5
(22) Date of filing: 06.12.2007
(51) Int. Cl.: B62B 3/06, B60B 35/04

(54) **Axle attachment for pallet truck**
Achsanbindung für einen Gabelstapler
Fixation axiale pour transpalette

(30) Priority: 11.12.2006 GB 0624686
(43) Date of publication of application: 18.06.2008
(73) Proprietor: Hoppecke Advanced Battery Technology GmbH, 08056 Zwickau (DE)
(72) Inventor: Parry, David B, Kenilworth, Warwickshire CV8 2AW (GB)
(74) Representative: Patentanwälte Bals & Vogel

(56) References cited:
- EP-A- 1 426 265
- EP-A- 1 486 393
- FR-A- 2 278 506
- GB-A- 704 317
- JP-A- 9 039 507
- JP-A- 2002 036 809
- US-A1- 2006 231 312

## Description

The present invention relates to an axle bar for a pallet truck.

A pallet truck is a known device which is utilised to enable laden pallets to be moved over smooth surfaces, for example in a warehouse. Such a truck typically comprises a wheeled "U" shaped frame, similar in shape to that of the fork of a fork-lift truck upon which are provided a pair of pallet fingers capable of being elevated. The frame is provided with wheels and rollers spaced in a tricycle arrangement. The tricycle arrangement comprises a roller provided on the underside of each fork, and a third set of wheels or rollers provided at the root of the fork on a member extending therebetween. The third set of wheels are typically pivotable in the manner of a castor so as to enable the truck to be moved over a surface in any given direction.

Disposed between the frame and the pallet fingers is a hydraulic ram which may be extended so as to elevate the pallet fingers. Typically the hydraulic ram of such a pallet truck enables the pallet fingers to be raised and lowered within a range of around 120 mm. In use the frame and pallet fingers are positioned under a load and the ram extended so that the load is lifted by the fingers. An operator can subsequently manoeuvre the pallet truck by a handle thereof so as to move the load to a desired location. High lift pallet trucks having an elevation range greater than 120 mm are also available. Such high lift trucks are commonly referred to as stacking trucks.

The tricycle arrangement of the wheels of the pallet truck can lead to stability problems, especially in instances where the truck is used to lift rolling or unstable items. For certain uses the pallet fingers of the pallet truck may be provided with a low friction surface, such as a roller bed, to assist in the loading and unloading of items. The presence of a low friction surface increases the possibility of a load shifting relative to the pallet fingers when the truck is moved and hence destabilising the truck as a whole.

In order to address this stability issue the third set of wheels or rollers may be repositioned outwardly from the front to rear centreline of the truck such that a wheel or roller is provided outboard of the frame on either side thereof. While the repositioning of the third set of wheels or rollers increases the stability of the truck it will be appreciated that the track width of the third set of wheels or rollers is greater than the track width of the fork rollers.

US 2006/0231312 is directed to a weight distribution assembly for a materials handling vehicle according to the features of the preamble of claim 1. The assembly includes first and second castors which are located on opposing sides of a drive wheel of the vehicle.

Solving these problems is achieved according to the features of claim 1. Preferred embodiments are defined in the dependent claims.

There is provided a pallet truck axle bar comprising an elongate member having at opposed ends thereof a wheel assembly, the elongate member being provided between the wheel assemblies with mounting points to enable the bar to be connected to the frame of a pallet truck characterised in that the mounting points are in use connectable to the fork roller brackets of a pallet truck, and the length of the elongate member is greater than the width of the pallet fingers of a pallet truck, such that, in use, the wheel assemblies are provided on either side of the pallet of a pallet truck so as to increase the truck width of the pallet fork truck across the pallet fingers.

The axle bar of the present invention provides a simple and easily installed way of increasing the track width of a pallet truck across the pallet fingers thereof in order to enhance the stability of the pallet truck and to lower rolling resistance.

The axle bar may be provided with a stabiliser. The stabiliser may take the form of a roller which is mounted to the elongate member intermediate the wheel assemblies. In a preferred embodiment the stabiliser roller comprises a lead in roller assembly removed from the underside of a pallet fork of a pallet truck. The axle bar may be provided with a plurality of such stabilisers.

The rotational axes of the wheel assemblies are preferably aligned with the longitudinal axis of the elongate member. Each mounting point preferably includes a member having a bore extending therethrough. The member has a width which is substantially equal to that of a fork roller such that the member is receivable in the fork roller mounting. Typically, the fork roller is mounted to a forked bracket. The mounting point member may thus be received by the forked bracket and an axle member, such as a pin, inserted through the bore and the bracket to retain the axle bar.

There is provided a pallet truck having an axle bar of the type described above.

An embodiment of the present invention will now be described with reference to the accompanying drawings in which:

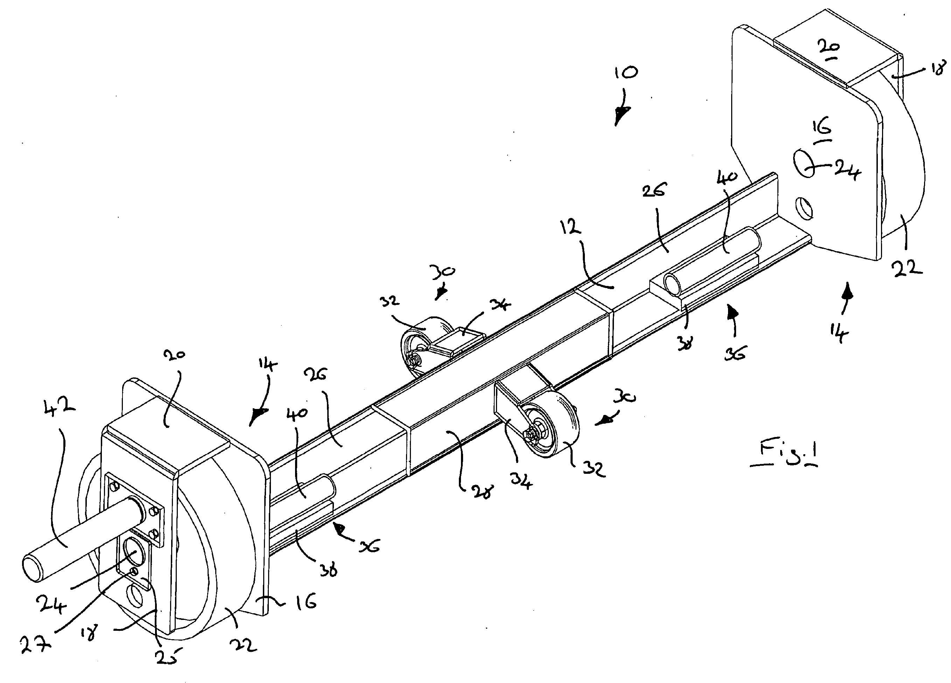

- Figure 1: shows a perspective view of an axle bar according to the present invention;

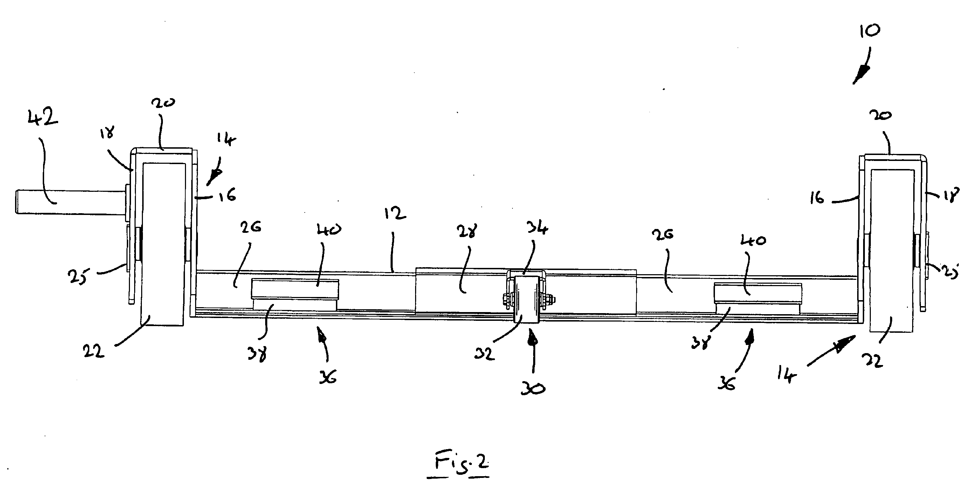

- Figure 2: shows a front view of the axle bar of figure 1; and

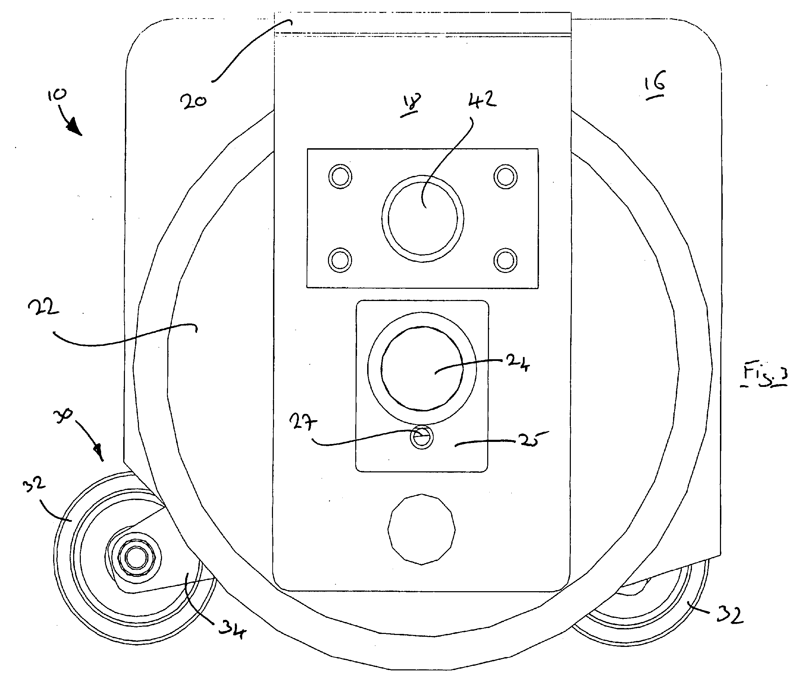

- Figure 3: shows an end view of the axle bar of figure 1.

Referring to the drawings there is shown an axle bar generally designated 10. The bar 10 includes a transverse member 12 which extends between opposed wheel assemblies 14. Each wheel assembly 14 comprises a back plate 16, a front plate 18, a bridging member 20 and a wheel 22. The plates 16,18 and bridging member 20 define a substantially "U" shaped bracket which surrounds the wheel 22. The wheel 22 of each assembly 14 is rotatably mounted to an axle 24 which is carried by the front and back plates 16,18. The axle 24 is mounted in appropriately configured bearings of the plates 16,18. A keeper plate 25 retained by a grub screw 27 is utilised to maintain the axle 24 in position. The length of the transverse member 12 is greater that the width of the frame and pallet forks of the pallet truck to which the bar 10 is intended to be fitted. As such, the wheels 22 in use are provided to either side of the frame and pallet forks.

The transverse member 12 is substantially "L" shaped in cross-section at it's outer portions 26 and is provided with a box section portion 28 at its midway point. The box-section portion 28 is provided with a pair of stabilising rollers, generally designated 30, which are provided on opposing sides thereof. Each roller 30 comprises a roller member 32 and a bracket 34 Each outer portion 26 of the transverse member 12 is provided with a mounting point 36 which, in use, enables the axle bar 10 to be fitted to a pallet truck. In the embodiment shown each mounting point 36 comprises a base 38 fixed to the transverse member 12 and a tube 40. The tube 40 is fixed to the base 38 and is axially aligned with the transverse member 12. In use, an axle member, such as a pin, can be inserted through the tube 40 and mounting feature a pallet truck frame in order to connect the axle bar 10 to the frame.

The mounting features of the pallet truck frame to which the axle bar 10 is connectable are defined by forked brackets to which the fork rollers are usually mounted. In order to fit the bar 10 to a pallet truck the fork rollers are removed and the bar 10 mounted to fork roller brackets. The length of the tube 40 is substantially equal to the width of a fork roller and as such, the tube is readily receivable within a fork roller bracket Advantageously, the stabilisers 30 may comprise lead in roller assemblies which have been removed from the underside of the pallet fingers.

In the embodiment shown the rotational axes of the wheels 22 are aligned with the longitudinal axis of the of the transverse member 12. It will be understood that the shape and size of the back plates 16 may be altered, as may the position of the transverse member 12 relative to the back plates and/or the position of each axle 24 between the plates 16,18. As such, the position of the rotational axes of the wheels 22 may be moved relative to the longitudinal axis of the transverse member 12. While two stabilising rollers 30 are shown, it will be appreciated that a greater or lesser number my be provided depending upon the intended service parameters of the pallet truck to which the bar 10 is fitted.

It will be appreciated that the diameter of each wheel 22 is greater than the diameter of the fork roller it replaces. The wheels 22 are of equal diameter and each may have a diameter in the range of 170 mm to 250 mm, although larger diameter wheels may be used if required. The front plate 18 of one of the wheel assemblies 14 is provided with a cylindrical projection generally designated 42. The projection 42, in use, may co-operate with a guide mechanism which is configured to guide the axle bar 10 and the pallet truck to which it is fitted along a predetermined path.

While the axle bar 10 is described above as being suitable for use with a pallet truck which has had the track of its third set of wheels widened, the axle bar 10 may equally e fitted to a pallet truck having the usual narrow track arrangement for the third set of wheels.

## Claims

1. A pallet truck and pallet truck axle bar (10) combination, the axle bar comprising an elongate member (12) having at opposed ends thereof a wheel assembly (14), the elongate member (12) being provided between the wheel assemblies (14) with mounting points (36) to enable the bar (10) to be connected to the frame of the pallet truck **characterised in that** the mounting points (36) are in use connected to the fork roller brackets of the pallet truck, and the length of the elongate member (12) is greater than the width of the pallet fingers of the pallet truck, such that, in use, the wheel assemblies (14) are provided on either side of the pallet fingers of a pallet truck so as to increase the track width of the pallet truck across the pallet fingers.

2. A combination claimed in claim 1, wherein the axle bar is provided with a stabiliser (30) which comprises a roller mounted to the elongate member (10) intermediate the wheel assemblies (14).

3. A combination as claimed in claim 2, wherein the stabiliser roller (30,32) comprises a pallet lead in roller of a pallet fork of a pallet truck.

4. A combination as claimed in claim 2 or claim 3, wherein the axle bar (10) is provided with two stabilisers rollers (30,32), each of which is positioned on an opposing side of the elongate member (12).

5. A combination as claimed in any preceding claim, wherein the rotational axes of the wheel assemblies (14) are aligned with the longitudinal axis of the elongate member (12).

6. A combination as claimed in any preceding claim, wherein each mounting point (36) includes a member (40) having a bore extending therethrough.

## Patentansprüche

1. Gabelstapler- und Gabelstapler-Achsstangen (10)-Kombination, wobei der Achsträger ein längliches Element (12) umfasst, das an gegenüberliegenden Enden davon eine Radanordnung (14) aufweist, wobei das längliche Element (12) zwischen den Radanordnungen (14) mit Befestigungsstellen (36) versehen ist, um zu ermöglichen, dass der Träger (10) mit dem Rahmen des Gabelstaplers verbunden wird, **dadurch gekennzeichnet, dass** die Befestigungsstellen (36) in Verwendung mit den Gabel-Rollenhalterungen des Gabelstaplers verbunden sind, und die Länge des länglichen Elements (12) größer als die Breite der Palettenfinger des Gabelstapels ist, derart, dass in Verwendung die Radanordnungen (14) auf jeder Seite der Palettenfinger eines Gabelstaplers so vorgesehen sind, dass die Spurweite des Gabelstaplers über die Palettenfinger vergrößert wird.

2. Kombination nach Anspruch 1, wobei der Achsträger mit einem Stabilisator (30) versehen ist, der eine Rolle umfasst, die am länglichen Element (10) zwischen den Radanordnungen (14) befestigt ist.

3. Kombination nach Anspruch 2, wobei die Stabilisatorrolle (30, 32) eine Palettenzuführrolle einer Palettengabel eines Gabelstaplers umfasst.

4. Kombination nach Anspruch 2 oder 3, wobei der Achsträger (10) mit zwei Stabilisatorrollen (30, 32) versehen ist, die jeweils auf einer gegenüberliegenden Seite des länglichen Elements (12) angeordnet sind.

5. Kombination nach einem der vorhergehenden Ansprüche, wobei die Drehachsen der Radanordnungen (14) mit der Längsachse des länglichen Elements (12) ausgerichtet sind.

6. Kombination nach einem der vorhergehenden Ansprüche, wobei jede Befestigungsstelle (36) ein Element (40) mit einer Bohrung umfasst, die sich dadurch erstreckt.

## Revendications

1. Combinaison de transpalette et de barre d'essieu de transpalette (10), la barre d'essieu comprenant un élément allongé (12) ayant à des extrémités opposées de celle-ci un ensemble de roue (14), l'élément allongé (12) étant prévu entre les ensembles de roues (14) avec des points de montage (36) pour permettre à la barre (10) d'être connectée au châssis du transpalette, **caractérisée en ce que** les points de montage (36) sont en utilisation connectés aux supports de rouleaux de fourche du transpalette, et la longueur de l'élément allongé (12) est supérieure à la largeur des bras du transpalette de sorte que, en utilisation, les ensembles de roues (14) soient prévus des deux côtés des bras d'un transpalette de manière à augmenter la largeur de piste du transpalette en travers des bras.

2. Combinaison selon la revendication 1, dans laquelle la barre d'essieu est dotée d'un stabilisateur (30) qui comprend un rouleau monté sur l'élément allongé (10) à une position intermédiaire entre les ensembles de roues (14).

3. Combinaison selon la revendication 2, dans lequel le rouleau stabilisateur (30, 32) comprend un rouleau d'entrée de palette d'une fourche de palette d'un transpalette.

4. Combinaison selon la revendication 2 ou la revendication 3, dans laquelle la barre d'essieu (10) est dotée de deux rouleaux stabilisateurs (30, 32), dont chacun est positionné sur un côté opposé de l'élément allongé (12).

5. Combinaison selon l'une quelconque des revendications précédentes, dans laquelle les axes de rotation des ensembles de roues (14) sont alignés avec l'axe longitudinal de l'élément allongé (12).

6. Combinaison selon l'une quelconque des revendications précédentes, dans laquelle chaque point de montage (36) inclut un élément (40) ayant un alésage s'étendant à travers celui-ci.
